(19) Europäisches Patentamt

European Patent Office

Office européen des brevets

(11) EP 1 913 350 B1

(12) FASCICULE DE BREVET EUROPEEN

(45) Date de publication et mention de la délivrance du brevet:
**20.04.2016 Bulletin 2016/16**

(21) Numéro de dépôt: **06794294.6**

(22) Date de dépôt: **04.08.2006**

(51) Int Cl.:
*G01J 3/02* [(2006.01)]     *G01J 3/28* [(2006.01)]
*G01J 3/45* [(2006.01)]     *G01J 3/453* [(2006.01)]

(86) Numéro de dépôt international:
**PCT/FR2006/001908**

(87) Numéro de publication internationale:
**WO 2007/017588 (15.02.2007 Gazette 2007/07)**

(54) **SPECTROGRAPHE À ONDE CONTRA-PROPAGATIVE**

KONTRAPROPAGATIVER WELLENSPEKTROGRAPH

CONTRA-PROPAGATIVE WAVE SPECTROGRAPH

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.08.2005 FR 0508429**

(43) Date de publication de la demande:
**23.04.2008 Bulletin 2008/17**

(73) Titulaires:
- **UNIVERSITE JOSEPH FOURIER**
  **38041 Grenoble Cédex 9 (FR)**
- **INSTITUT NATIONAL POLYTECHNIQUE DE GRENOBLE**
  **38031 Grenoble (FR)**
- **Université de Technologie de Troyes**
  **10010 Troyes Cédex (FR)**
- **CENTRE NATIONAL DE LA RECHERCHE SCIENTIFIQUE -CNRS-**
  **75794 Paris Cedex 16 (FR)**

(72) Inventeurs:
- **LE COARER, Etienne**
  **F-38100 Grenoble (FR)**
- **BENECH, Pierre**
  **F-38100 Grenoble (FR)**
- **KERN, Pierre**
  **F-38700 Corenc (FR)**
- **LERONDEL, Gilles**
  **F-10800 Saint Julien Les Villas (FR)**
- **BLAIZE, Sylvain**
  **F-10000 Troyes (FR)**

- **MORAND, Alain**
  **F-38100 Grenoble (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**US-A- 5 111 466**

- **FROGGAT M ET AL: "ALL-FIBER WAVEMETER AND FOURIER-TRANSFORM SPECTROMETER" OPTICS LETTERS, OSA, OPTICAL SOCIETY OF AMERICA, WASHINGTON, DC, US, vol. 24, no. 14, 15 juillet 1999 (1999-07-15), pages 942-944, XP000860568 ISSN: 0146-9592**
- **NORMANDIN R ET AL: "MONOLITHIC, SURFACE-EMITTING, SEMICONDUCTOR VISIBLE LASERS AND SPECTROMETERS FOR WDM FIBER COMMUNICATION SYSTEMS" IEEE JOURNAL OF QUANTUM ELECTRONICS, IEEE SERVICE CENTER, PISCATAWAY, NJ, US, vol. 27, no. 6, 1 juin 1991 (1991-06-01), pages 1520-1530, XP000229850 ISSN: 0018-9197**
- **LABEYRIE A ET AL: "Optical data storage in microfibres" OPTICS LETTERS, OSA, OPTICAL SOCIETY OF AMERICA, WASHINGTON, DC, US, vol. 23, no. 4, 15 février 1998 (1998-02-15), pages 301-303, XP002351998 ISSN: 0146-9592 cité dans la demande**

EP 1 913 350 B1

**Description**

La présente invention se rapporte au domaine de l'optique.

La présente invention se rapporte plus particulièrement à un spectrographe à transformée de Fourier en optique guidée utilisant des ondes contra-propagatives.

Il est connu que des ondes contra-propagatives dans un guide d'onde créent des interférences comme le montre la publication de Labeyrie et *al* (Labeyrie, A. and Huignard, J.P. and Loiseaux, B., Optical data storage in microfibers, Optics Letters, 23, 301-303 (1998)). L'interférogramme obtenu est fonction de la différence de chemin optique parcouru par chacune des ondes, et l'analyse de cet interférogramme permet d'obtenir des informations sur les sources lumineuses et/ou sur les milieux traversés par ces ondes.

Cependant, lorsque les ondes contra-propagatives interfèrent au sein d'un guide d'onde, l'interférogramme obtenu reste confiné dans le guide et n'est pas accessible pour des mesures spectrométriques.

L'art antérieur connaît également un spectrographe par ondes contra-propagatives décrit par la publication de Froggat et Erdogan (Froggat, M. et Erdogan, T., All-fiber wavemeter and Fourier-transform spectrometer, Optics Letters, 24, 942-944 (1999)). Un interférogramme est obtenu en faisant interférer deux ondes contra-propagatives extraites du guide par un réseau de bragg présent à l'intérieur du guide. La lumière est extraite du guide selon un angle qui dépend de la relation entre la longueur d'onde $\lambda$ et le pas du réseau de Bragg $\Lambda$ : $\sin(\alpha)=n_{eff}-\lambda/\Lambda$ (p943, coll, 116-24).

Dans ce système, l'utilisation à l'intérieur du guide d'un réseau périodique est absolument nécessaire. Le pas de l'interférogramme tel qu'il est enregistré sur le détecteur dépend de cet angle et du pas du réseau de Bragg. Par exemple, pour une onde monochromatique Froggat obtient une période des franges : $P_{Frogatt}=1/2(n_{eff}-\lambda/\Lambda)$. Au contraire, l'interférogramme obtenu dans la publication de Labeyrie susmentionnée dépend uniquement de la différence de marche des ondes depuis leur point de division. Par exemple dans le cas d'une onde monochromatique, $P_{Labeyrie}=1/2n_{eff}$.

Dans ce système, une onde propagative associée au signal injecté est créée. Cette onde propagative est distincte du champ d'interférence et ne donne pas un accès direct à l'interférogramme situé dans le guide.

Par ailleurs, le système, et notamment la structure périodique de Bragg, perturbe toutefois l'onde à l'intérieur du guide.

Par ailleurs, le système ci-dessus n'enseigne l'injection que d'une seule onde qui est réfléchie en une onde contra-propagative. Ceci possède l'inconvénient de ne pas permettre l'accès à une frange centrale d'éventuelles interférences.

L'invention vise notamment à pallier ces inconvénients.

La présente invention entend donc permettre un accès à cet interférogramme pour des ondes contra-propagatives guidées.

L'accès à l'interférogramme par interférence d'ondes contra-propagatives possède également l'avantage de ne nécessiter aucune partie mobile pour l'observation, comme c'est par exemple le cas dans un interféromètre classique du type Michelson.

Pour ce faire, la présente invention se rapporte à un spectrographe 11 comprenant un guide d'onde 10 muni de deux accès, un moyen d'injection de deux ondes guidées contra-propagatives par chacun desdits accès de sorte à créer une interférence spatiale au sein dudit guide, un moyen de détection de l'énergie de l'onde évanescente du champ guidé issu de l'interférence desdites ondes contra-propagatives.

Selon l'invention, on accède à l'interférogramme situé dans le guide par l'intermédiaire de l'onde évanescente du champ guidé, ce qui donne un accès réel à cet interférogramme.

Au contraire, dans la publication de Froggat susmentionnée, c'est un réseau périodique situé au coeur du guide qui extrait chacune des deux ondes pour les faire interférer sur le détecteur constituant un interférogramme différent.

De préférence, ledit moyen de détection comprend au moins un guide plan (14, 14a, 14b) situé à proximité dudit guide et au moins un photodétecteur agencé pour détecter une onde en sortie dudit guide plan.

Avantageusement, ledit moyen de détection comprend une pluralité de détecteurs locaux répartis entre les deux accès dudit guide.

Avantageusement, ledit moyen de détection comprend au moins une pointe diffusante fixe ou mobile et au moins un photodétecteur.

Selon un mode de réalisation, ledit moyen d'injection des deux ondes est un séparateur d'onde agencé de sorte à diriger les deux parties d'une même onde selon les deux accès dudit guide.

L'invention concerne également un système d'imagerie spectroscopique comprenant une pluralité de spectrographes selon l'invention, disposés selon une matrice, les moyens d'injections étant dans le plan focal d'une optique d'entrée.

On comprendra mieux l'invention à l'aide de la description, faite ci-après à titre purement explicatif, d'un mode de réalisation de l'invention, en référence aux figures annexées :

- la figure 1 illustre un premier mode de réalisation de l'invention dans le cas d'un spectrographe contra-propagatif fermé à boucle ;
- la figure 2 illustre un second mode de réalisation de l'invention avec détection sur un plan incliné ;
- la figure 3 illustre un mode de réalisation de l'invention avec deux prismes ;
- La figure 4 illustre un mode de réalisation de l'invention pour un guide à deux entrées ;

- la figure 5 illustre un mode de réalisation de l'invention dans lequel la détection est réalisée par une pluralité de détecteurs locaux situés dans le champ évanescent ;
- la figure 6 illustre un mode de réalisation de l'invention dans lequel la détection est réalisée par une pointe diffusante ;
- la figure 7 illustre un mode de réalisation de l'invention comprenant un moyen de variation de la phase des signaux ;
- la figure 8 illustre un mode de réalisation de l'invention dans lequel on utilise un guide en boucle et une pluralité de détecteurs locaux ;
- la figure 9 illustre un autre mode de réalisation de l'invention pour une boucle fermée et un moyen de variation de la phase.

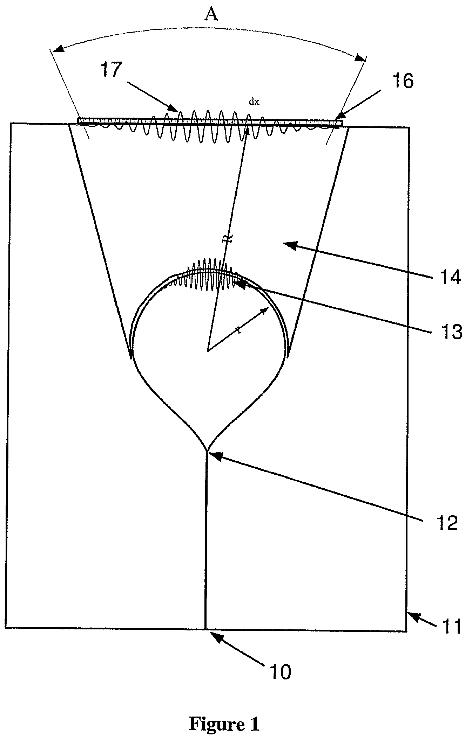

Selon un premier mode de réalisation illustré figure 1, la lumière à analyser est introduite dans le dispositif 11 au bout du guide d'onde 10 soit par la connectorisation d'une fibre optique, soit par une injection grâce à un dispositif d'optique de volume ou tout autre système d'injection de la lumière guidée ou non.

La lumière se propage jusqu'au composant 12 qui sépare l'onde en deux parties. L'interférogramme se construit autour de la zone 13 qui assure un découplage par onde évanescente de la lumière du guide courbe. Le composant 12 assure le passage des ondes par deux moyens d'accès distincts du guide 10 au niveau de la zone 13. La fonction oscillante illustrée figure 1 au niveau de la zone 13 représente l'interférogramme présent dans la zone d'interférence 13.

La zone 13 est située à égale distance de la zone 12 de séparation de l'onde suivant les deux chemins les reliant.

Le dispositif 11 comprend également une zone 14 de guide plan de telle façon que la lumière présente dans le guide courbe peut fuir dans la zone 14 de manière radiale si bien que la partie de l'interférogramme qui était présent dans le guide courbe se trouve guidée dans la direction verticale perpendiculaire au plan de la figure (c'est à dire dans l'épaisseur du composant) jusqu'au bord du support 17 tout en étant agrandie géométriquement dans le plan du système par le rapport $R(x)/r$ où $x$ est la coordonnée le long du bord, r est le rayon de courbure du guide et $R(x)$ est la distance radiale séparant le point de coordonnée x au centre de courbure de la partie du guide qui lui correspond.

Dans ce mode de réalisation, le pas des franges est ajustable en fonction du rapport de distance R/r de l'arête au centre de courbure de la boucle ce qui permet d'échantillonner correctement au sens de Shannon l'interférogramme avec un détecteur dont la dimension des pixels serait plus grandes que le quart de la longueur d'onde contrairement au spectrographe de la publication de Froggat susmentionnée pour lequel la période des franges dépend uniquement du choix du pas du réseau qui ne donne alors accès qu'à un domaine spectral étroit $\lambda^2/(4neff.p)$ autour de $\Lambda/2$.

La zone 14 correspond par exemple à un guide plan juxtaposé au guide courbe servant à contrôler le taux de fuite de la lumière issue du guide courbe et de guider la lumière jusqu'à l'arête du composant 17 . Il est entendu que pour un guide non courbé, le prisme 14 est également utilisable pour délocaliser la détection.

Au sein du prisme 14, l'onde évanescente du champ guidé issu de l'interférence des ondes contra-propagatives est convertie en une onde propagative permettant de délocaliser la détection.

Un moyen de détection photosensible 16 est ajusté le long de la zone tangente du support de façon à détecter la partie de l'interférogramme extraite du guide.

La reconstruction du signal doit tenir compte de la transformation géométrique qui projette l'abscisse curviligne le long du guide vers la coordonnée x. Cette géométrie fait que pour un détecteur ayant des pixels régulièrement espacés, la loi d'échantillonnage de l'interférogramme est telle que $\delta=arctan(x/R).r$ ; $\delta$ est l'abscisse curviligne des différences de marche prises à partir du lieu de la frange centrale pour des chemins optiques égaux à partir de la zone de séparation 12. x représente la distance géométrique de projection de l'interférogramme sur l'arête du composant.

La quantité de lumière extraite du guide dans la zone de découplage 13 du guide 10 dépend d'une adaptation géométrique ou d'indice de réfraction entre le guide courbe et le guide plan. Il est ainsi possible de moduler la quantité de lumière qui doit fuir en chaque lieu de 13, ce qui permet ainsi d'agir sur l'apodisation de l'interférogramme échantillonné au bord du support 17. Ainsi une adaptation constante du taux de fuite conduira à une distribution exponentielle décroissante de la lumière le long du guide courbe dans la zone 13 qui dépend du sens d'arrivée de l'onde dans cette partie. La dimension du système dépend de l'écartement entre les éléments d'image du détecteur (pixel). Le dimensionnement se fait par exemple de la manière suivante :

On part des caractéristiques du détecteur 16, soit *dx* la dimension du pixel et N le nombre de pixels dans la barrette. La longueur du détecteur 16 est alors *L=N.dx*. Dans la gamme de fréquences que l'on veut analyser, il faut que le détecteur soit sensible et que les guides d'ondes soient monomodes et propagatifs. On définit alors la plage de longueurs d'ondes de fonctionnement par $\lambda_{min}$ et $\lambda_{max}$. L'échantillonnage au centre de l'interférogramme doit permettre de placer deux pixels pour une distance qui correspond à l'interfrange à la longueur d'onde $\lambda_{min}/4$ dans le milieu d'indice n multiplié par le grandissement G dû au guide plan 14 en vertu du théorème de Shannon en bande large. Ce grandissement au centre de l'interférogramme est *G=R/r* tel que :

$$dx = G . \lambda_{min} / 4n .$$

L'angle d'ouverture *A* du prisme 14 doit correspondre à la longueur du détecteur rapporté au centre de courbure de la boucle du guide contra-propagatif.

$$A = 2 arctan(L/2R) .$$

Enfin, la courbure r du guide ainsi que la forme exacte du guide plan 14 est dictée par un calcul électromagnétique connu par exemple dans la publication de K. R. Hiremath et al (K. R. Hiremath, M. Hammer, R. Stoffer, L. Prkna, J. Ctyroky, Analytical approach to dielectric optical bent slab waveguides Optical and Quantum Electronics 37 (1-3), 37-61 (2005)) en fonction du taux de fuite que l'on désire donner.

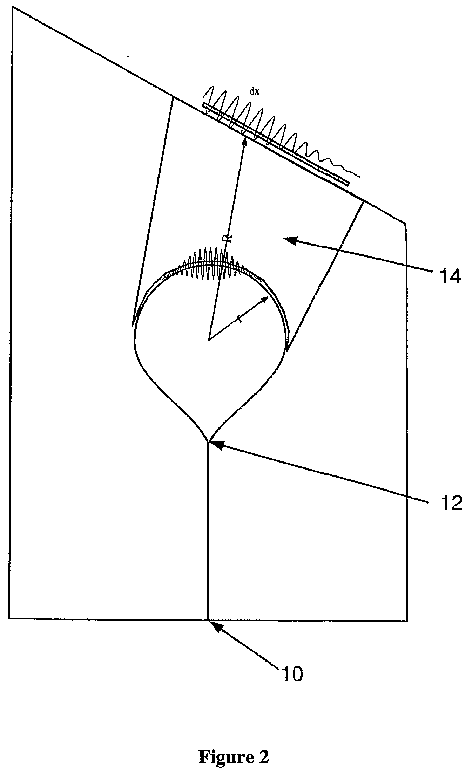

Selon un second mode de réalisation de l'invention illustré figure 2, la zone de guidage 14 possède une forme dissymétrique de façon à ce que l'on puisse enregistrer de manière asymétrique un interférogramme par rapport à la frange centrale. Par ailleurs en coupant le plan 17 obliquement par rapport à la symétrie du système, les franges correspondant au centre de l'interférogramme qui sont plus riches en information sur le spectre seront mieux échantillonnées au détriment de l'échantillonnage des hautes fréquences qui présentent parfois un intérêt moindre.

De la manière similaire, il est également possible de rallonger l'un des bras de l'interféromètre dans une configuration telle que celle illustrée figure 1. De la sorte, l'interférogramme se trouvera décalé sur la barrette du photodétecteur dans la direction où la boucle du guide 10 a été allongée.

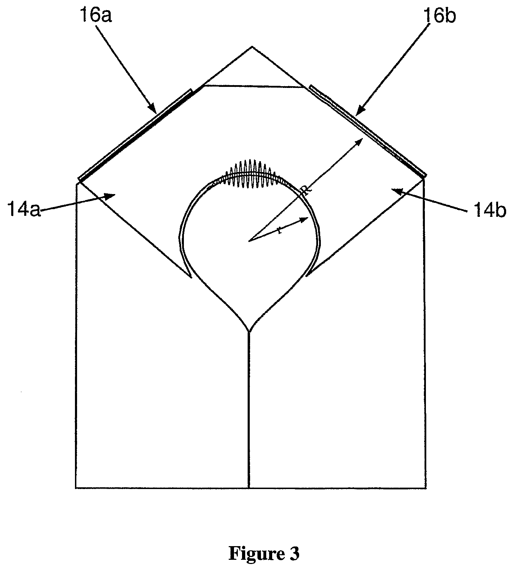

Illustré figure 3, le spectrographe selon l'invention peut également comprendre une pluralité de prismes 14a, 14b, associés à une pluralité de détecteurs 16a, 16b, afin d'échantillonner plusieurs parties distinctes de l'interférogramme.

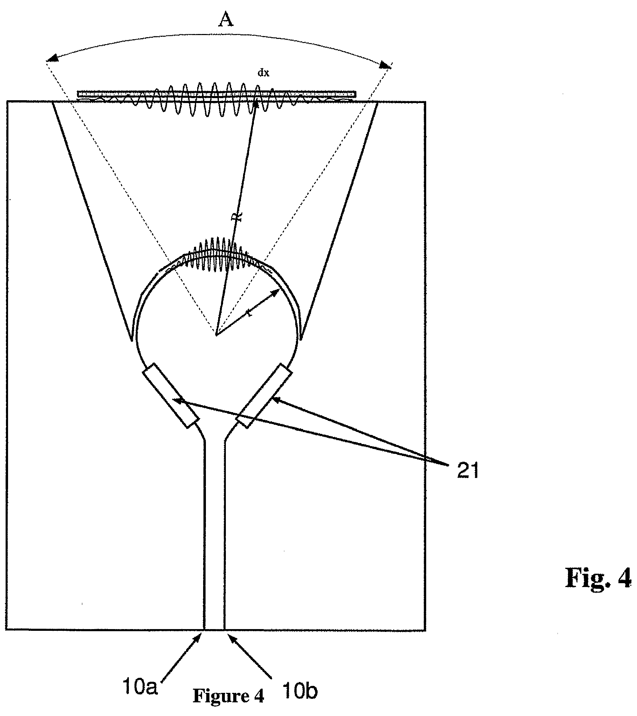

Selon un autre mode de réalisation illustré figure 4, il est possible de diviser l'onde au préalable avant l'injection dans les deux accès du guide 10a et 10b. Cette configuration est particulièrement optimisée pour mesurer la phase de l'interférogramme. La symétrie du système assure une parfaite achromaticité, donc une insensibilité de la mesure de la phase à la fluctuation des longueurs d'ondes dans le signal à mesurer. Par ailleurs il est possible de modifier le chemin optique sur l'une des voies dans le composant lui-même 21, soit par un effet électro-optique qui modifie l'indice du milieu comme c'est le cas pour le niobate de lithium, soit par un effet élasto-optique ou acousto-optique et tout autres procédés. En externe, cette variation du chemin optique peut se faire un système séparateur d'onde et de ligne à retard comme un montage de Michelson par exemple. Cette variation permet d'enregistrer d'autres parties de l'interférogramme et d'augmenter ainsi la résolution spectrale du système ou d'améliorer l'échantillonnage de l'interférogramme.

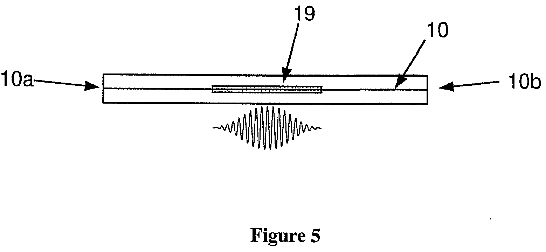

Selon encore une autre variante de l'invention, illustré figure 5, l'onde divisée au préalable est injectée dans le composant en 10a et en 10b par les deux accès d'un guide d'onde 10, l'onde interfère dans le guide et, des détecteurs, des points diffusants ou des bolomètres 19 sont placés en surface du guide et donc sont sensibles à une fraction du champ présent à l'intérieur du guide.

On positionne donc par exemple une pluralité de détecteurs locaux fixes 19 à l'extérieur du guide 10. Pour réaliser ces détecteurs locaux, on peut par exemple utiliser un matériau sensible aux ondes évanescentes issues du guide 10. Les détecteurs 19 échantillonnent alors l'intensité des ondes évanescentes.

L'homme du métier comprendra bien que si l'on désire détecter une longueur d'onde λ, les détecteurs sont espacés d'une distance sensiblement égale à λ/4, afin de reconstruire le signal correspondant.

Pour la détection d'un spectre polychromatique en bande large, cette distance doit être le quart de la longueur d'onde la plus courte du spectre étudié. Les longueurs d'ondes inférieures seraient alors détectées avec une efficacité moindre voire ne plus du tout contribuer aux systèmes d'interférence.

Inversement, pour la détection d'un spectre polychromatique en bande étroite, il est possible de placer des détecteurs à des distances supérieures à λ/4 en vertu du théorème de Shannon en bande étroite si ces détecteurs présentent une dimension inférieure au quart de la longueur d'onde la plus courte du spectre étudié.

La couche détectrice 19 comprend donc par exemple une pluralité de détecteurs locaux équidistants en faisant attention qu'une répartition régulière peut entraîner une perturbation de la transmission de l'onde par un effet de réseau de Bragg.

Pour solutionner ce problème, on peut éventuellement positionner un milieu photosensible continu entre le guide d'onde et les détecteurs locaux régulièrement espacés, ou bien positionner les détecteurs locaux d'une manière apériodique comme par exemple une série d'espacement qui serait définis par la suite des nombres premiers.

On notera que ces détecteurs peuvent être de plusieurs sortes sans limitation pour la portée de l'invention.

Ce sont par exemple des jonctions pn photoconductrices réalisées sur un substrat semi-conducteur aminci comportant des photodiodes et des électrodes pour collecter un courant aux bornes des photodiodes. Ce substrat est adjacent au guide d'onde 10 soit par adhésion moléculaire, soit par collage.

Les détecteurs peuvent également être des microbolomètres par fils supraconducteurs formant un réseau réparti entre les deux accès opposés du guide d'onde 10.

Il est également envisageable d'utiliser des microantennes, des photoconducteurs de type Sélénium ou des photodétecteurs à effet Josephson.

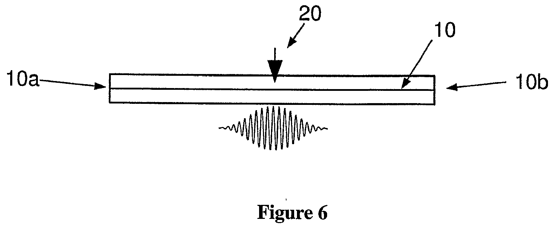

De manière similaire, illustré figure 6, l'interférogramme généré à l'intérieur du guide 10 est fortement sensible au déphasage existant entre les deux ondes aux entrées 10a et 10b opposées de la structure : l'interférogramme se déplace le long du guide en fonction de ce déphasage. Il est donc possible d'enregistrer l'interférogramme au cours de son déplacement à l'aide d'un détecteur ou d'un point diffuseur unique et fixe ou mobile 20 placé sur le guide.

Il est aussi possible de remplacer les photodétecteurs dans le champ évanescent par un ou plusieurs points diffusants de dimension plus petite que le quart de la longueur d'onde la plus courte dans le sens de propagation afin de convertir le champ évanescent et le faire propager vers un détecteur situé en dehors de la zone évanescente rendant possible l'emploi de détecteurs plus gros que la longueur d'onde comme les pixels d'un CCD par exemple.

Soit on impose une variation de phase connue et cela permet d'enregistrer l'interférogramme (mesures spectrométriques), soit on mesure le déplacement de l'interférogramme et cela permet de déterminer le déphasage entre les deux ondes (métrologie), soit enfin on déplace le point diffusant de manière connue pour enregistrer l'interférogramme.

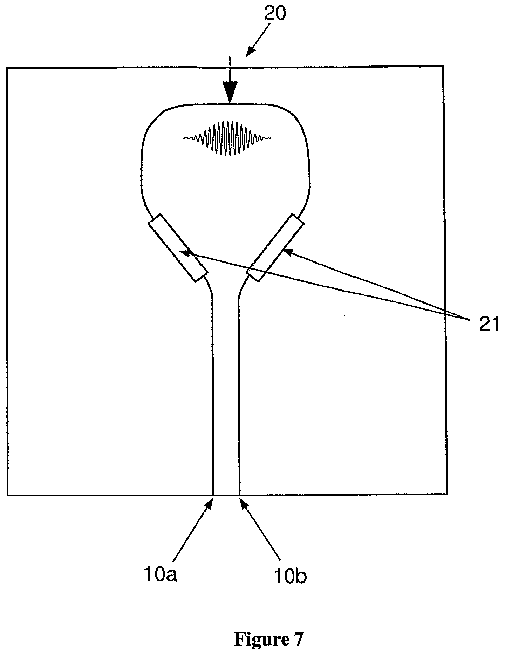

Un moyen de faire varier la phase à l'intérieur du composant est représenté figure 7, dans le cas ouvert par action sur le chemin optique 21, la séparation de l'onde est externe et injectée en 10a et 10b. La détection de l'interférogramme est réalisée par la pointe ou le défaut diffusant 20.

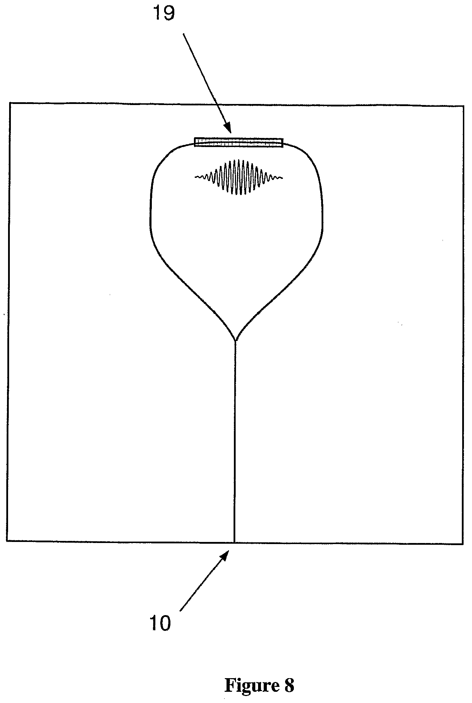

Illustré figure 8, il est possible d'utiliser un guide fermé avec séparation de l'onde muni des détecteurs locaux décrits en référence à la figure 5. Dans ce cas, bien que le guide ne soit pas courbé, on peut également positionner un prisme comme sur la figure 1 pour observer la figure d'interférence au bord du dispositif sans grandissement.

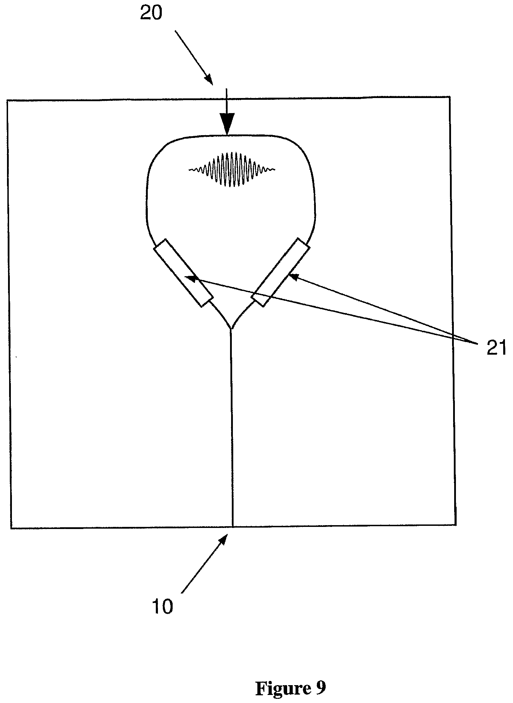

De la même façon, on peut utiliser un élément diffusant en combinaison avec une division interne de l'onde comme illustré figure 9.

Enfin, l'invention concerne également un système d'imagerie spectrométrique comprenant une pluralité de spectrographe tels que précédemment décrits, disposés en matrice. Dans ce cas, le système obtenu composé de deux lentilles qui permet d'adapter l'onde à un guide monomode. Une collection de détecteur est placée dans le champ évanescent du guide. On obtient par exemple une barrette de détecteur CCD qui doit avoir un pas inférieur au quart de la longueur d'onde compte tenu de l'indice du milieu dans lequel est fabriqué le guide monomode. Une mosaïque composée de tels éléments doit être utilisée dans un système optique qui divise le front d'onde et forme l'image simultanément sur les deux faces de cette mosaïque.

L'invention fournissant un spectrographe avec détection in situ est applicable dans de nombreux domaines utilisant des mesures spectrographique tels des gyrolasers, la métrologie, ou l'OCT (Tomographie à Cohérence Optique) ou encore la sensorique (détection et analyse chimique et biochimique).

## Revendications

1. Spectrographe comprenant

- un guide d'onde (10) muni de deux accès (10a, IOb, 12),
- un moyen d'injection de deux ondes guidées contra-propagatives par chacun desdits accès de sorte à créer une interférence spatiale au sein dudit guide,

**caractérisé en ce qu'**il comprend en outre

- un moyen de détection (19, 20, 14, 16) de l'onde évanescente du champ guidé issu de l'interférence desdites ondes contra-propagatives comprenant :

- soit au moins un guide plan (14, 14a, 14b) situé à proximité dudit guide et dans lequel l'onde évanescente du champ guidé issu de l'interférence des ondes contra-propagatives est convertie en une onde propagative ; et au moins un photodétecteur (16, 16a, 16b) agencé pour détecter de façon délocalisée ladite onde propagative en sortie dudit guide plan,
- soit au moins une pointe diffusante (20), fixe ou mobile, placée en surface du guide ; et au moins un photodétecteur.

2. Spectrographe selon la revendication 1, **caractérisé en ce que** ledit moyen de détection comprend une pluralité de détecteurs locaux répartis entre les deux accès dudit guide.

3. Spectrographe selon la revendication 2 dans lequel lesdits détecteurs locaux sont de dimension inférieure au quart de la longueur d'onde desdites ondes.

4. Spectrographe selon la revendication 1, dans lequel le moyen de détection comprend au moins une pointe diffusante et dans lequel ladite pointe diffusante est de dimension inférieure au quart de la longueur d'onde desdites ondes.

5. Spectrographe selon la revendication 1, **caractérisé en ce que** ledit moyen d'injection des deux ondes est un séparateur d'onde agencé de sorte à diriger les deux parties d'une même onde selon les deux accès dudit guide.

**6.** Spectrographe selon l'une quelconque des revendications précédentes, dans lequel le moyen de détection comprend au moins un guide plan (14) possédant une forme dissymétrique de façon à pouvoir enregistrer de manière asymétrique un interférogramme par rapport à la frange centrale.

**7.** Spectrographe selon l'une quelconque des revendications précédentes, dans lequel le moyen de détection comprend une pluralité de prismes (14a, 14b) associés à une pluralité de détecteurs (16a, 16b) afin d'échantillonner plusieurs parties distinctes de l'interférogramme.

**8.** Système d'imagerie spectroscopique **caractérisé en ce qu'**il comprend une pluralité de spectrographe selon l'une quelconque des revendications précédentes, disposés selon une matrice, les moyens d'injections étant dans le plan focal d'une optique d'entrée.

**Patentansprüche**

**1.** Spektrograf, umfassend:

- einen Wellenleiter (10), ausgestattet mit zwei Zugängen (10a, 10b, 12),
- ein Mittel zur Injektion von zwei gegenpropagativ geleiteten Wellen durch jeden der Zugänge, um eine räumliche Interferenz innerhalb des Leiters zu erzeugen,

**dadurch gekennzeichnet, dass** er außerdem Folgendes umfasst:

- ein Nachweismittel (19, 20, 14, 16) der evaneszenten Welle des geleiteten Felds, das aus der Interferenz der gegen-propagativen Wellen stammt, umfassend:
- entweder mindestens einen ebenen Leiter (14, 14a, 14b), der sich in der Nähe des Leiters befindet, und in dem die evaneszente Welle des geleiteten Felds, das aus der Interferenz der gegen-propatativen Wellen stammt, in eine propagative Welle umgewandelt wird; und mindestens einem Photodetektor (16, 16a, 16b), der angeordnet ist, um auf delokalisierte Weise die propagative Welle am Ausgang des ebenen Leiters nachzuweisen,
- oder mindestens eine Diffusionsspitze (20), die fest oder beweglich ist, die an der Oberfläche des Leiters angeordnet ist; und mindestens einen Photodetektor.

**2.** Spektrograf nach Anspruch 1, **dadurch gekennzeichnet, dass** das Nachweismittel eine Vielzahl von lokalen Detektoren umfasst, die zwischen den zwei Zugängen des Leiters verteilt sind.

**3.** Spektrograf nach Anspruch 2, wobei die lokalen Detektoren eine Abmessung aufweisen, die kleiner als ein Viertel der Wellenlänge der Wellen ist.

**4.** Spektrograf nach Anspruch 1, wobei das Nachweismittel mindestens eine Diffusionsspitze umfasst, und wobei die Diffusionsspitze eine Abmessung aufweist, die kleiner als ein Viertel der Wellenlänge der Wellen beträgt.

**5.** Spektrograf nach Anspruch 1, **dadurch gekennzeichnet, dass** das Einspritzmittel der zwei Wellen ein Wellentrenner ist, der derart angeordnet ist, dass er die zwei Teile einer gleichen Welle gemäß den zwei Zugängen des Leiters ausrichtet.

**6.** Spektrograf nach einem der vorhergehenden Ansprüche, wobei das Nachweismittel mindestens einen ebenen Leiter (14) umfasst, der eine dissymmetrische Form aufweist, um auf asymmetrische Weise ein Interferogramm mit Bezug auf den mittleren Saum aufzeichnen zu können.

**7.** Spektrograf nach einem der vorhergehenden Ansprüche, wobei das Nachweismittel eine Vielzahl von Prismen (14a, 14b) umfasst, die mit einer Vielzahl von Detektoren (16a, 16b) assoziiert sind, um mehrere verschiedene Teile des Interferogramms zu testen.

**8.** Spektroskopisches Abbildungssystem, **dadurch gekennzeichnet, dass** es eine Vielzahl von Spektrografen nach einem der vorhergehenden Ansprüche umfasst, die gemäß einer Matrix angeordnet sind, wobei sich die Mittel zur Injektion auf der Fokalebene einer Eingangsoptik befinden.

**Claims**

**1.** Spectrograph comprising

- a waveguide (10) provided with two accesses (10a, 10b, 12),
- a means for injecting two guided contra-propagative waves by each one of said accesses in such a way as to create a spatial interference within said guide,

**characterised in that** it further comprises

- a means for detecting (19, 20, 14, 16) the evanescent wave of the guided field produced by the interference of said contra-propagative waves comprising:
- either at least one plane guide (14, 14a, 14b) located in the vicinity of said guide and wherein the evanescent wave of the guided field produced by the interference of the contra-propagative waves is converted into a propagative wave; and at least one photodetector (16, 16a, 16b) arranged in order to detect in a delocalised manner said propagative wave at the output of said plane guide,

- or at least one diffusing tip (20), fixed or mobile, placed on the surface of the guide; and at least one photodetector.

2. Spectrograph according to claim 1, **characterised in that** said means for detecting comprises a plurality of local detectors distributed between the two accesses of said guide.

3. Spectrograph according to claim 2 wherein said local detectors are of a dimension less than one-quarter of the wavelength of said waves.

4. Spectrograph according to claim 1 wherein the means for detecting comprises at least one diffusing tip and wherein said diffusing tip is of a dimension less than one-quarter of the wavelength of said waves.

5. Spectrograph according to claim 1, **characterised in that** said means for injecting the two waves is a wave separator arranged in such a way as to direct the two portions of the same wave according to the two accesses of said guide.

6. Spectrograph as claimed in any preceding claim, wherein the means for detecting comprises at least one plane guide (14) having a dissymmetric shape in such a way as to be able to record in an asymmetric manner an interferogram with respect to the central fretwork.

7. Spectrograph as claimed in any preceding claim, wherein the means for detecting comprises a plurality of prisms (14a, 14b) associated with a plurality of detectors (16a, 16b) in order to sample several separate portions of the interferogram.

8. Spectroscopic imaging system **characterised in that** it comprises a plurality of spectrographs as claimed in any preceding claim, arranged according to a matrix, with the means for injecting being in the focal plane of an optical input.

**Figure 1**

**Figure 2**

**Figure 3**

**Fig. 4**

Figure 4

10a    10b

21

**Figure 5**

**Figure 6**

Figure 7

19

10

**Figure 8**

Figure 9

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LABEYRIE, A. ; HUIGNARD, J.P. ; LOISEAUX, B.** Optical data storage in microfibers. *Optics Letters,* 1998, vol. 23, 301-303
- **FROGGAT, M. ; ERDOGAN, T.** All-fiber wavemeter and Fourier-transform spectrometer. *Optics Letters,* 1999, vol. 24, 942-944
- **K. R. HIREMATH ; M. HAMMER ; R. STOFFER ; L. PRKNA ; J. CTYROKY.** Analytical approach to dielectric optical bent slab waveguides. *Optical and Quantum Electronics,* 2005, vol. 37 (1-3), 37-61